# EUROPEAN PATENT SPECIFICATION

(11) **EP 2 461 408 B1**
(45) Date of publication and mention of the grant of the patent: **23.07.2014**
(21) Application number: 11188448.2
(22) Date of filing: 09.11.2011
(51) Int. Cl.: H01M 8/04, H01M 8/02, H01M 8/10

(54) **Fuel supply amount adjustment film, printed circuit board, and fuel cell**
Film zur Anpassung der Brennstoffversorgungsmenge, Leiterplatte und Brennstoffzelle
Membrane régulant l'alimentation en carburant, circuit imprimé et pile à combustible

(30) Priority: 06.12.2010 JP 2010271463
(43) Date of publication of application: 06.06.2012
(73) Proprietor: Nitto Denko Corporation, Ibaraki-shi, Osaka 567-8680 (JP)
(72) Inventor: Inoue, Shinichi, Ibaraki-shi, Osaka 567-8680 (JP); Ebe, Hirofumi, Ibaraki-shi, Osaka 567-8680 (JP)
(74) Representative: Gill, Stephen Charles

(56) References cited:
- EP-A1- 1 835 558
- EP-A2- 2 001 069
- EP-A2- 2 388 850
- JP-A- 2009 140 618
- US-A1- 2004 062 965
- US-A1- 2007 099 048
- US-A1- 2007 138 133
- US-A1- 2010 196 800
- XINMIN HAO ET AL: "Studies on Porous and Morphological Structures of Expanded PTFE Membrane Through Biaxial Stretching Technique", INTERNATIONAL NONWOVENS JOURNAL, vol. 2-2005, 1 July 2005 (2005-07-01), pages 31-38, XP55020157,
- HANOT H ET AL: "Industrial applications of ion track technology", NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 267, no. 6, 1 March 2009 (2009-03-01) , pages 1019-1022, XP026067108, ISSN: 0168-583X, DOI: 10.1016/J.NIMB.2009.02.011 [retrieved on 2009-02-08]

## Description

### BACKGROUND OF THE INVENTION

### Field of the Invention

The present invention relates to a fuel supply amount adjustment film, and a printed circuit board and a fuel cell including the same.

### Description of the Background Art

Smaller-sized and higher-capacity cells are required for mobile devices such as mobile phones. Therefore, fuel cells capable of obtaining higher energy density than conventional cells such as lithium secondary cells have been developed. Examples of the fuel cells include direct methanol fuel cells.

In the direct methanol fuel cell, methanol is decomposed with a catalyst, to generate a hydrogen ion. The hydrogen ion and oxygen in air are reacted, to generate power. In this case, chemical energy can be significantly efficiently converted into electrical energy so that a very high energy density can be obtained.

JP 2009-129588 A discusses a single cell for a fuel cell with an electrolyte film interposed between an anode and a cathode. A holder composed of a porous polyurethane foam is arranged on a surface outside the anode, and an oxidant permeable layer is arranged on a surface outside the cathode. A fuel such as methanol is supplied to the anode after penetrating the holder, and an oxidant is supplied to the cathode after penetrating the oxidant permeable layer.

The holder discussed in JP 2009-129588 A has high liquid absorbability so that a duration of an electromotive force of a fuel cell can be improved. In the fuel cell, however, a loss of fuel supply occurs because the fuel oozes out on side surfaces of the holder. A holder having a desired permeability is difficult to produce. Therefore, an amount of supply of the fuel to the anode via the holder cannot be properly adjusted.

EP 2 001 069 A2 discloses an FPC board including a base insulating layer made of polyimide. A conductor layer made of copper is formed on one surface of the base insulating layer.

US 2004/0062965 discloses processes for fabricating microfluidic fuel cell systems in which micron-scale features are formed by bonding layers of polyimide laminate.

EP 2 388 850 A2, which falls under Article 54(3) EPC, discloses an FPC board, electrode films and a fuel accommodating chamber accommodated in a casing. In the FPC board, a plurality of collector portions are joined on to a base insulating layer with an adhesive pattern sandwiched therebetween. The base insulating layer is made of porous ePTFE.

### BRIEF SUMMARY OF THE INVENTION

The present invention is directed to a fuel supply amount adjustment film capable of preventing a fuel from oozing out on its side surfaces while properly adjusting an amount of supply of a fuel to a cell element, a printed circuit board, and a fuel cell.

(1) A first aspect of the present invention provides a printed circuit board according to claim 1. Hereinafter, the term "anisotropic through pores" means such a plurality of through pores, which extend from one surface to another surface of the insulating layer but with substantially none of the through pores extending to a side surface of the layer.

The fuel supply amount adjustment film can be used to supply a fuel to a cell element in the fuel cell. The fuel is supplied to the cell element via the plurality of anisotropic through pores of the insulating layer. In this case, the fuel is prevented from oozing out on side surfaces of the fuel supply amount adjustment film. This enables a loss of the fuel to be reduced. The pore diameter of each of the plurality of anisotropic through pores and the porosity for the plurality of anisotropic through pores can be optionally set. Therefore, an amount of supply of the fuel to the cell element can be properly adjusted by properly setting the pore diameter of each of the anisotropic through pores and the porosity for the anisotropic through pores in the fuel supply amount adjustment film. Preferably, substantially all of the through pores extend between a top surface and a bottom surface of the layer.

The pore diameter of each of the plurality of anisotropic through pores is not less than 0.01 µm and not more than 100 µm.

The pore diameter of each of the plurality of anisotropic through pores is 0.01 µm or more so that the fuel can be sufficiently supplied to the cell element via the anisotropic through pores. This enables an output of the fuel cell to be increased. Further, the pore diameter of each of the plurality of anisotropic through pores is 100 µm or less so that the fuel can be prevented from being excessively supplied to the cell element via the anisotropic through pores.

(2) The porosity for the plurality of anisotropic through pores of the insulating layer may be not less than 1 % and not more than 90 %.

The porosity for the plurality of anisotropic through pores of the insulating layer is 1 % or more so that the fuel can be sufficiently supplied to the cell element via the anisotropic through pores. This enables an output of the fuel cell to be increased. The porosity for the anisotropic through pores of the insulating layer is 90 % or less so that the fuel can be prevented from being excessively supplied to the cell element via the anisotropic through pores.

(3) The thickness of the insulating layer is not less than 5 µm and not more than 500 µm. The thickness of the insulating layer is 5 µm or more so that the durability of the fuel supply amount adjustment film is improved. The thickness of the insulating layer is 500 µm or less so that the flexibility and the handleability of the fuel supply amount adjustment film are improved.

(4) The printed circuit board includes the fuel supply amount adjustment film and a conductor layer having a predetermined pattern provided on the fuel supply amount adjustment film.

The printed circuit board can be used to supply the fuel to the cell element in the fuel cell while taking out power generated in the cell element to the exterior. The power generated in the cell element is taken out to the exterior via the conductor layer.

The fuel is supplied to the cell element via the plurality of anisotropic through pores in the fuel supply amount adjustment film. In this case, the fuel is prevented from oozing out on the side surfaces of the fuel supply amount adjustment film. This enables a loss of the fuel to be reduced. The pore diameter of each of the plurality of anisotropic through pores and the porosity for the plurality of anisotropic through pores can be optionally set. Therefore, the pore diameter of each of the anisotropic through pores and the porosity for the plurality of anisotropic through pores in the fuel supply amount adjustment film are properly set so that an amount of supply of the fuel to the cell element can be properly adjusted.

(5) The printed circuit board may further include a cover layer formed on the fuel supply amount adjustment film to cover at least a part of the conductor layer. In this case, the conductor layer is prevented from corroding by the fuel in the fuel cell.

(6) A second aspect of the present invention provides a fuel cell according to claim 5.

In the fuel cell, the cell element and the printed circuit board are accommodated in the casing. The power generated in the cell element is taken out of the casing via the conductor layer in the printed circuit board.

The fuel is supplied to the cell element via the plurality of anisotropic through pores in the printed circuit board. In this case, the fuel is prevented from oozing out on side surfaces of the fuel supply amount adjustment film. This enables a loss of the fuel to be reduced. The pore diameter of each of the plurality of anisotropic through pores and the porosity for the plurality of anisotropic through pores can be optionally set. Therefore, the pore diameter of each of the anisotropic through pores and the porosity for the anisotropic through pores in the fuel supply amount adjustment film are properly set so that an amount of supply of the fuel to the cell element can be properly adjusted.

A third aspect of the present invention provides a method of manufacturing a printed circuit board, as set out in claim 7.

Other features, elements, characteristics, and advantages of the present invention will become more apparent from the following description of preferred embodiments of the present invention with reference to the attached drawings.

### BRIEF DESCRIPTION OF THE SEVERAL VIEWS OF THE DRAWINGS

Figs. 1 (a) and 1 (b) are respectively a plan view and a sectional view of an FPC board according to a first embodiment,
Figs. 2 (a) and 2 (b) are schematic sectional views of a base insulating layer,
Figs. 3 (a) to 3 (d) are sectional views illustrating steps of a method for manufacturing the FPC board,
Figs. 4 (a) to 4 (d) are sectional views illustrating steps of the method for manufacturing the FPC board,
Figs. 5 (a) to 5 (c) are sectional views illustrating steps of the method for manufacturing the FPC board,
Fig. 6 is an external perspective view of a fuel cell using the FPC board,
Fig. 7 illustrates functions in the fuel cell,
Fig. 8 is a sectional view of a fuel cell according to a second embodiment,
Figs. 9 (a) to 9 (d) are sectional views illustrating steps of a method for manufacturing the FPC board according to the second embodiment, and
Figs. 10 (a) to 10 (d) are sectional views illustrating steps of a method for manufacturing the FPC board according to the second embodiment.

### DETAILED DESCRIPTION OF THE INVENTION

### [1] Description of First Embodiment

A fuel supply amount adjustment film according to a first embodiment of the present invention and a printed circuit board including the same while referring to the drawings. In the present embodiment, a flexible printed circuit board (hereinafter abbreviated as an FPC board) having flexibility will be described as an example of the printed circuit board.

### (1) Configuration of FPC Board

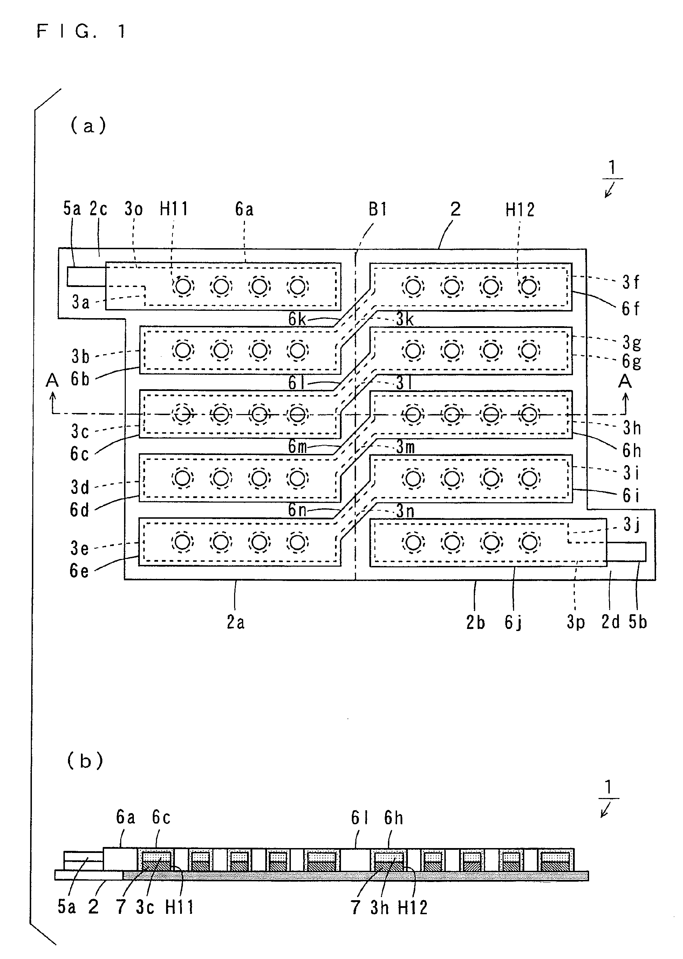

Fig. 1 (a) is a plan view of an FPC board according to the first embodiment, and Fig. 1 (b) is a sectional view taken along the line A-A of the FPC board illustrated in Fig. 1 (a).

As illustrated in Figs. 1 (a) and 1 (b), the FPC board 1 includes a base insulating layer 2 made of porous polyethylene terephthalate (PET) having anisotropic through pores. Thus, the base insulating layer 2 is liquid-permeable. The base insulating layer 2 is used as a fuel supply amount adjustment film of a fuel cell. A material for the base insulating layer 2 includes resin such as porous polycarbonate, polyimide (PI), or polyvinylidene fluoride (PVDF) having anisotropic through pores in place of PET.

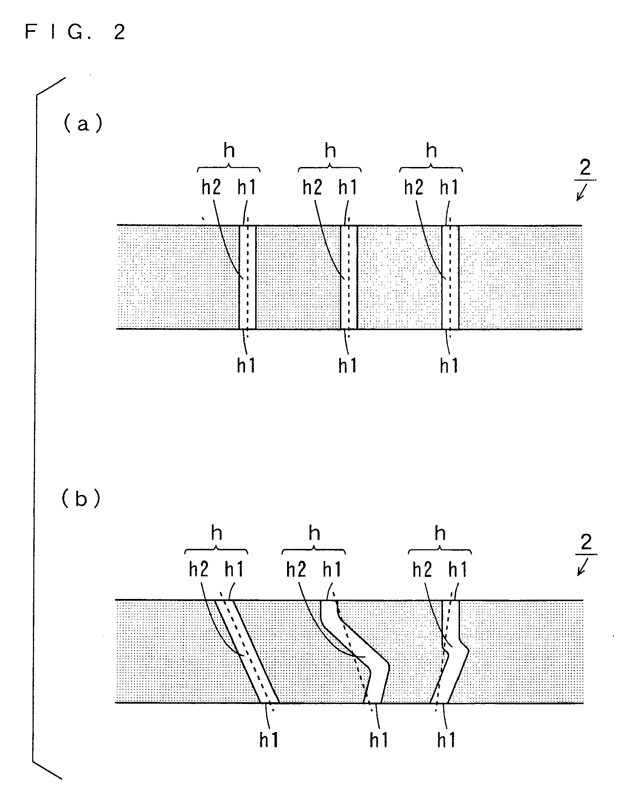

Fig. 2 is a schematic sectional view of the base insulating layer 2. As illustrated in Fig. 2 (a), the base insulating layer 2 has openings h1 on its one surface and the other surface, the openings h1 on the one surface of the base insulating layer 2 and the openings h1 on the other surface thereof communicate with each other without diverging from each other by single communication paths h2, respectively. Each of the communication paths h2 has a shape that can specify a long axis indicated by a dotted line and a short axis perpendicular to the long axis, and the long axis extends in a direction intersecting the one surface and the other surface of the base insulating layer 2 at an angle of not less than 30 degrees and not more than 90 degrees. If each of the communication paths h2 is partially curved, as illustrated in Fig. 2 (b), an average direction of the long axis indicated by a dotted line may intersect the one surface and the other surface of the base insulating layer 2 at an angle of not less than 30 degrees and not more than 90 degrees. The openings h1 and the communication paths h2 cause anisotropic through pores h to be formed in the base insulating layer 2. In the present embodiment, the base insulating layer 2 does not have an opening on its side surfaces.

Each of the anisotropic through pores h of the base insulating layer 2 is formed by irradiating the insulating layer 2 with a heavy ion beam to form an ion track therein and etching the ion track, for example. The pore diameter of each of the anisotropic through pores h is not less than 0.01 µm and not more than 100 µm, and preferably not less than 0.01 µm and not more than 20 µm. The porosity for the anisotropic through pores h of the base insulating layer 2 is set to not less than 1 % and not more than 90 %. The anisotropic through pores h of the base insulating layer 2 may be formed using laser light or a drill.

Returning to Fig. 1, the base insulating layer 2 includes a first insulating portion 2a, a second insulating portion 2b, a third insulating portion 2c, and a fourth insulating portion 2d. The first insulating portion 2a and the second insulating portion 2b each have a rectangular shape, and are integrally formed while being adjacent to each other. Hereinafter, sides that are parallel to a boundary line between the first insulating portion 2a and the second insulating portion 2b are referred to as lateral sides, and a pair of sides that are perpendicular to the lateral sides of the first insulating portion 2a and the second insulating portion 2b are referred to as end sides.

The third insulating portion 2c is formed to extend outward from a part of the lateral side at a corner of the first insulating portion 2a. The fourth insulating portion 2d is formed to extend outward from a part of the lateral side at a corner of the second insulating portion 2b at a diagonal position of the corner of the first insulating portion 2a.

A bend portion B1 is provided on the boundary line between the first insulating portion 2a and the second insulating portion 2b to divide the base insulating layer 2 into two substantially equal parts. As described below, the base insulating layer 2 can be bent along the bend portion B1. The bend portion B1 may be a shallow groove with a line shape or a mark with a line shape, for example. Alternatively, there may be nothing at the bend portion B1 if the base insulating layer 2 can be bent at the bend portion B1. When the base insulating layer 2 is bent along the bend portion B1, the first insulating portion 2a and the second insulating portion 2b are opposed to each other. In this case, the third insulating portion 2c and the fourth insulating portion 2d are not opposed to each other.

Rectangular collector portions 3a, 3b, 3c, 3d, 3e, 3f, 3g, 3h, 3i, and 3j, connection conductor portions 3k, 3l, 3m, and 3n, and drawn-out conductor portions 3o and 3p are formed on one surface of the base insulating layer 2 with an adhesive pattern 7 illustrated in Fig. 1 (b) sandwiched therebetween. The collector portions 3a to 3j, the connection conductor portions 3k to 3n, and the drawn-out conductor portions 3o and 3p are made of copper, for example.

Any adhesive such as an epoxy resin adhesive, a phenolic resin adhesive, a polyester resin adhesive, an acrylic resin adhesive, or a polyimide adhesive is used as the adhesive pattern 7. In the present embodiment, a photo-acid generating agent is added to the adhesive pattern 7. Thus, the adhesive pattern 7 is photosensitive.

Each of the collector portions 3a to 3j has a rectangular shape. The collector portions 3a to 3e extend parallel to the end sides of the first insulating portion 2a, and are provided in a direction of the lateral sides of the first insulating portion 2a. Similarly, the collector portions 3f to 3j extend parallel to the end sides of the second insulating portion 2b, and are arranged in a direction of the lateral sides of the second insulating portion 2b. In this case, the collector portions 3a to 3e and the collector portions 3f to 3j are symmetrically arranged with respect to the bend portion B1.

Each of the connection conductor portions 3k to 3n is formed on the first insulating portion 2a and the second insulating portion 2b to intersect the bend portion B1. The connection conductor portion 3k electrically connects the collector portion 3b and the collector portion 3f to each other, the connection conductor portion 31 electrically connects the collector portion 3c and the collector portion 3g to each other, the connection conductor portion 3m electrically connects the collector portion 3d and the collector portion 3h to each other, and the connection conductor portion 3n electrically connects the collector portion 3e and the collector portion 3i to each other.

A plurality of (four in this example) openings H11 are formed in a direction of the end sides in each of the collector portions 3a to 3e. A plurality of (four in this example) openings H12 are formed in the direction of the end sides in each of the collector portions 3f to 3j.

The drawn-out conductor portion 3o is formed to linearly extend from an outer short side of the collector portion 3a onto the third insulating portion 2c. The drawn-out conductor portion 3p is formed to linearly extend from an outer short side of the collector portion 3j onto the fourth insulating portion 2d.

A cover layer 6a is formed on the first insulating portion 2a to cover the collector portion 3a and a part of the drawn-out conductor potion 3o. Thus, the tip of the drawn-out conductor portion 3o is exposed while not covered with the cover layer 6a. The exposed portion of the drawn-out conductor portion 3o is referred to as a drawn-out electrode 5a. Cover layers 6b, 6c, 6d, and 6e are formed on the first insulating portion 2a to cover the collector portions 3b to 3e, respectively. The cover layers 6a to 6e contact an upper surface of the first insulating portion 2a inside the openings H11 of the collector portions 3a to 3e, respectively.

A cover layer 6j is formed on the second insulating portion 2b to cover the collector portion 3j and a part of the drawn-out conductor potion 3p. Thus, the tip of the drawn-out conductor portion 3p is exposed while not covered with the cover layer 6j. The exposed portion of the drawn-out conductor portion 3p is referred to as a drawn-out electrode 5b. Cover layers 6f, 6g, 6h, and 6i are formed on the second insulating portion 2b to cover the collector portions 3f to 3i, respectively. The cover layers 6f to 6j contact an upper surface of the second insulating portion 2b inside the openings H12 of the collector portions 3f to 3j, respectively.

Cover layers 6k, 61, 6m, and 6n are formed on the first insulating portion 2a and the second insulating portion 2b to cover the connection conductor portions 3k to 3n, respectively. Each of the cover layers 6a to 6n is made of a resin composition containing a conductive material.

Examples of the resin composition include polyester resin, polyurethane resin, polyacrylic resin, epoxy resin, phenolic resin, polyimide resin, polyamide imide resin, or acrylic resin, or a mixture of at least two types of the foregoing resins.

On the other hand, examples of a conductive material include a carbon material such as carbon black, graphite, carbon nanotube, a carbon fiber, or black lead, metallic particles such as silver, gold (Au), or silver nanoparticles, a conductive polymeric material such as polythiophene or polyaniline, or a mixture of at least two types of the foregoing materials. An additive amount of the conductive material may be an amount in which the conductive material can be dispersed in resin. The amount of the conductive material to be added to 100 parts by weight of the resin composition is preferably not less than 1 part by weight and not more than 90 parts by weight, more preferably not less than 10 parts by weight and not more than 70 parts by weight, and still more preferably not less than 40 parts by weight and not more than 70 parts by weight.

### (2) Method for Manufacturing FPC Board

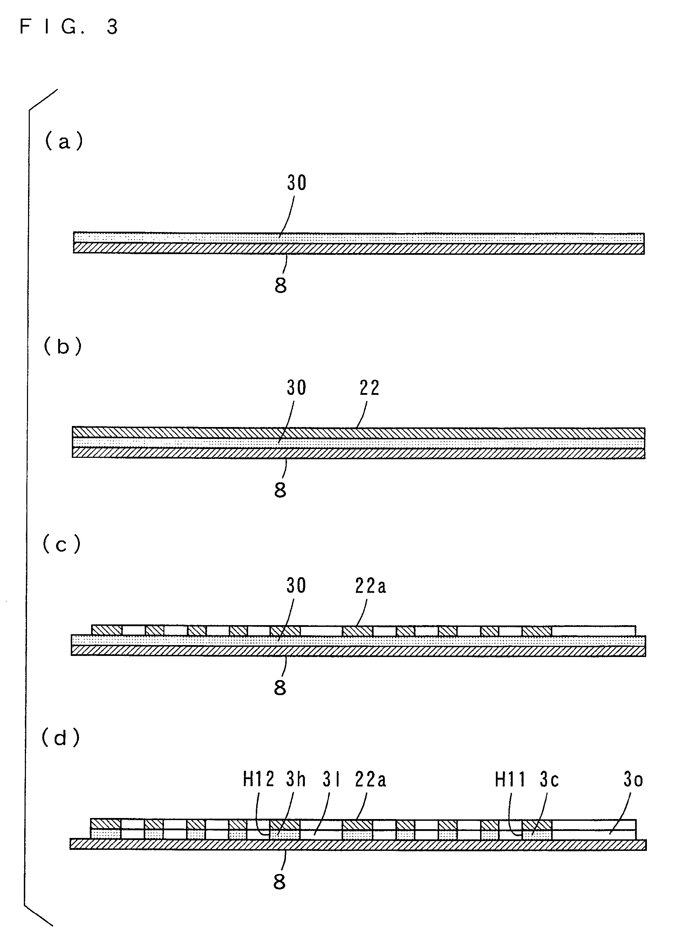

A method for manufacturing the FPC board 1 illustrated in Fig. 1 will be described below. Figs. 3, 4 and 5 are sectional views illustrating steps of the method for manufacturing the FPC board 1, which respectively correspond to sectional views taken along the line A-A illustrated in Fig. 1.

First, a two-layer base material including a carrier layer 8 and a conductor layer 30 is prepared, as illustrated in Fig. 3 (a). Resin such as PET having a pressure sensitive adhesive layer or a thin metal film such as stainless steel having a pressure sensitive adhesive layer can be used as the carrier layer 8. The conductor layer 30 is made of copper, for example. The conductor layer 30 may be composed of silver, gold, titanium, platinum, or an alloy such as a silver alloy, a gold alloy, a titanium alloy, or a platinum alloy. The carrier layer 8 and the conductor layer 30 may be attached to each other by lamination or subjected to contact bonding by a pressing machine. Contact bonding between the carrier layer 8 and the conductor layer 30 may be performed in a humidified state or a vacuum state. Alternatively, the carrier layer 8 and the conductor layer 30 may be replaced with a two-layer copper clad laminate (CCL) composed of copper and PET, for example.

A resist film 22 is formed of a photosensitive dry film resist or the like on the conductor layer 30 at a proper temperature and pressure, as illustrated in Fig. 3 (b). The resist film 22 is exposed in a predetermined pattern, followed by development, to form an etching resist pattern 22a, as illustrated in Fig. 3 (c).

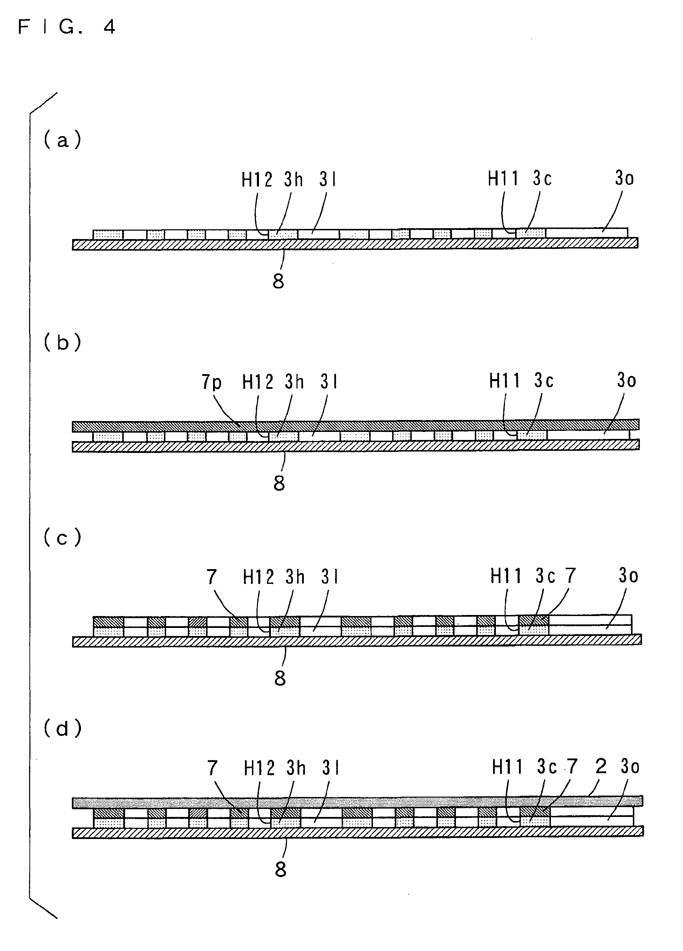

Then, a region of the conductor layer 30 that is exposed while not covered with the etching resist pattern 22a is removed by etching using ferric chloride, as illustrated in Fig. 3 (d). The etching resist pattern 22a is then removed by a stripping solution, as illustrated in Fig. 4 (a). Thus, the collector portions 3a to 3j, the connection conductor portions 3k to 3n, and the drawn-out conductor portions 3o and 3p (see Fig. 1 (a)) are formed on the carrier layer 8. The plurality of openings H11 are formed in the collector portions 3a to 3e, and the plurality of openings H12 are formed in the collector portions 3f to 3j.

The collector portions 3a to 3j, the connection conductor portions 3k to 3n, and the drawn-out conductor portions 3o and 3p may be formed on the carrier layer 8 by another method such as sputtering or evaporation. The collector portions 3a to 3j, the connection conductor portions 3k to 3n, and the drawn-out conductor portions 3o and 3p may be formed on the carrier layer 8 by plating using the carrier layer 8 composed of stainless steel. Further, the conductor layer 30 is punched out into patterns of collector portions 3a to 3j, the connection conductor portions 3k to 3n, and the drawn-out conductor portions 3o and 3p using laser light or a die, and the patterns obtained by the punching may be joined to the carrier layer 8 using an adhesive or the like.

Then, an adhesive layer precursor 7p is applied on the whole surface including top surfaces (surfaces not in contact with the carrier layer 8) of the collector portions 3a to 3j, the connection conductor portions 3k to 3n, and the drawn-out conductor portions 3o and 3p, as illustrated in Fig. 4 (b). The adhesive layer precursor 7p is exposed with a predetermined mask pattern sandwiched therebetween, followed by development, to form the adhesive pattern 7 having a predetermined pattern on the collector portions 3a to 3j, the connection conductor portions 3k to 3n, and the drawn-out conductor portions 3o and 3p, as illustrated in Fig. 4 (c).

When the adhesive layer precursor 7p is negative photosensitive, the adhesive layer precursor 7p is exposed with a mask pattern having an inverted shape of the collector portions 3a to 3j, the connection conductor portions 3k to 3n, and the drawn-out conductor portions 3o and 3p sandwiched therebetween. When the adhesive layer precursor 7p is positive photosensitive, the adhesive layer precursor 7p is exposed with a mask pattern having the same shape as the collector portions 3a to 3j, the connection conductor portions 3k to 3n, and the drawn-out conductor portions 3o and 3p sandwiched therebetween.

When the adhesive layer precursor 7p is positive photosensitive, the adhesive layer precursor 7p may be exposed from its lower surface (a surface in contact with the collector portions 3a to 3j, the connection conductor portions 3k to 3n, and the drawn-out conductor portions 3o and 3p). In this case, the collector portions 3a to 3j, the connection conductor portions 3k to 3n, and the drawn-out conductor portions 3o and 3p can be used as the mask pattern. Thus, a separate mask pattern need not be used. This results in reduction in manufacturing steps and cost of the FPC board 1. The carrier layer 8 made of PET transmits exposure light, and therefore does not prevent the adhesive layer precursor 7p from being exposed from its lower surface (a surface in contact with the collector portions 3a to 3j, the connection conductor portions 3k to 3n, and the drawn-out conductor portions 3o and 3p).

The applied adhesive layer precursor 7p excluding its portions on the collector portions 3a to 3j, the connection conductor portions 3k to 3n, and the drawn-out conductor portions 3o and 3p may be removed by a chemical solution, laser light or plasma processing. In this case, the mask pattern need not be used during exposure of the adhesive layer precursor 7p. Similarly, the adhesive layer precursor 7p may be applied only on the collector portions 3a to 3j, the connection conductor portions 3k to 3n, and the drawn-out conductor portions 3o and 3p by screen printing or a paste dispenser. Also in this case, the mask pattern need not be used during exposure of the adhesive layer precursor 7p.

Then, the base insulating layer 2 having the anisotropic through pores h, illustrated in Fig. 2, is joined onto the collector portions 3a to 3j, the connection conductor portions 3k to 3n, and the drawn-out conductor portions 3o and 3p with the adhesive pattern 7 sandwiched therebetween, as illustrated in Fig. 4 (d). The collector portions 3a to 3j, the connection conductor portions 3k to 3n, and the drawn-out conductor portions 3o and 3p may be joined to the base insulating layer 2 in a humidified state or a vacuum state. Alternatively, the adhesive pattern 7 may be cured at any temperature, pressure, and degree of vacuum after the joining.

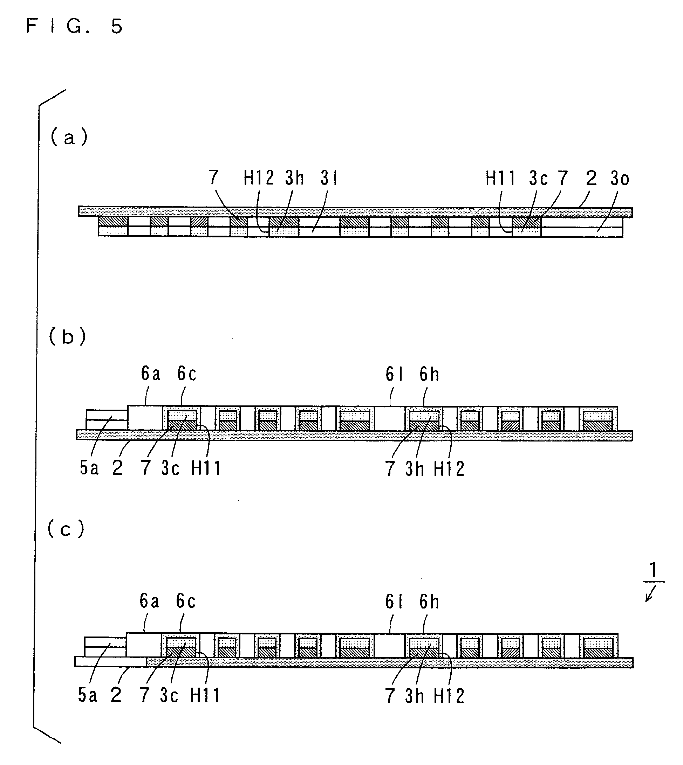

The carrier layer 8 is then separated from the collector portions 3a to 3j, the connection conductor portions 3k to 3n, and the drawn-out conductor portions 3o and 3p, as illustrated in Fig. 5 (a). Then, the cover layers 6a to 6n (see Fig. 1 (a)) are formed by application or lamination on the base insulating layer 2 to cover the collector portions 3a to 3j, the connection conductor portions 3k to 3n, and the drawn-out conductor portions 3o and 3p, as illustrated in Fig. 5 (b). The drawn-out electrodes 5a and 5b (see Fig. 1 (a)) are exposed while not covered with the cover layers 6a and 6j. The top and bottom of the sectional views of Figs. 5 (b) and 5 (c) are reverse to those of the sectional view of Fig. 5 (a).

Finally, the base insulating layer 2 is cut in a predetermined shape, so that the FPC board 1 including the base insulating layer 2, the collector portions 3a to 3j, the connection conductor portions 3k to 3n, the drawn-out conductor portions 3o and 3p, and the cover layers 6a to 6n is completed, as illustrated in Fig. 5 (c).

The thickness of the base insulating layer 2 is not less than 5 µm and not more than 500 µm. If the thickness of the base insulating layer 2 is 5 µm or more, the durability of the base insulating layer 2 is improved. If the thickness of the base insulating layer 2 is 500 µm or less, the flexibility and the handleability of the base insulating layer 2 are improved.

The thicknesses of the collector portions 3a to 3j, the connection conductor portions 3k to 3n, and the drawn-out conductor portions 3o and 3p are preferably not less than 1 µm and not more than 100 µm, more preferably not less than 5 µm and not more than 70 µm, and still more preferably not less than 10 µm and not more than 50 µm. The collector portions 3a to 3j, the connection conductor portions 3k to 3n, and the drawn-out conductor portions 3o and 3p improve in durability and an electrical characteristic such as resistance if the thicknesses are 1 µm or more, and improve in flexibility and handleability if the thicknesses are 100 µm or less.

The thicknesses of the cover layers 6a to 6n are preferably not less than 1 µm and not more than 100 µm, more preferably not less than 10 µm and not more than 50 µm, and still more preferably not less than 15 µm and not more than 40 µm. If the thicknesses are 1 µm or more, the collector portions 3a to 3j, the connection conductor portions 3k to 3n, and the drawn-out conductor portions 3o and 3p are sufficiently prevented from being exposed from the cover layers 6a to 6n. Even if a barrier layer is formed on the collector portions 3a to 3j, the connection conductor portions 3k to 3n, and the drawn-out conductor portions 3o and 3p to prevent corrosion, the barrier layer can be sufficiently prevented from dropping out of the collector portions 3a to 3j, the connection conductor portions 3k to 3n, and the drawn-out conductor portions 3o and 3p. If the thicknesses are 100 µm or less, the cover layers 6a to 6n improve in flexibility and handleability.

While the FPC board 1 is manufactured by a subtractive method in Figs. 3 to 5, the present invention is not limited to this. For example, another manufacturing method such as a semi-additive method may be used.

### (3) Fuel Cell Using FPC Board

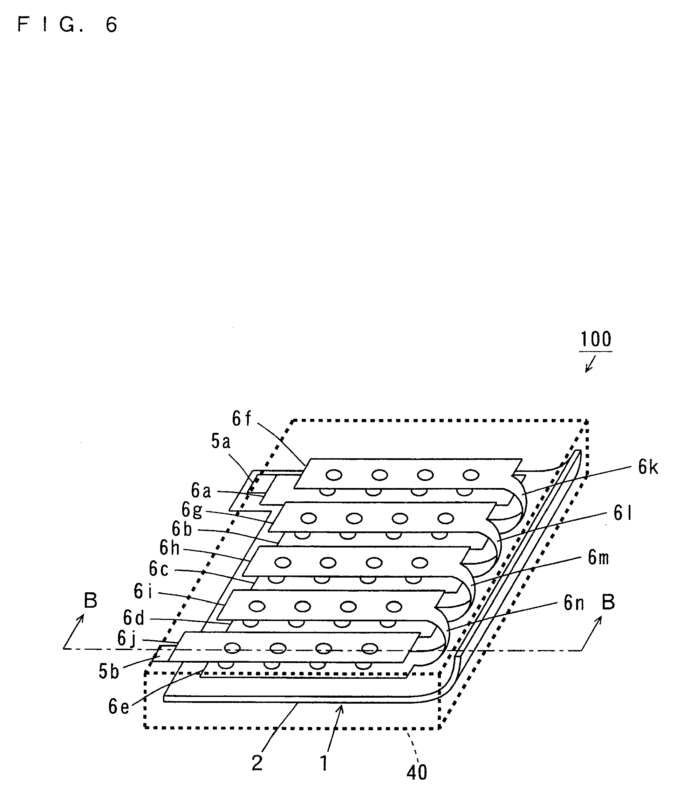

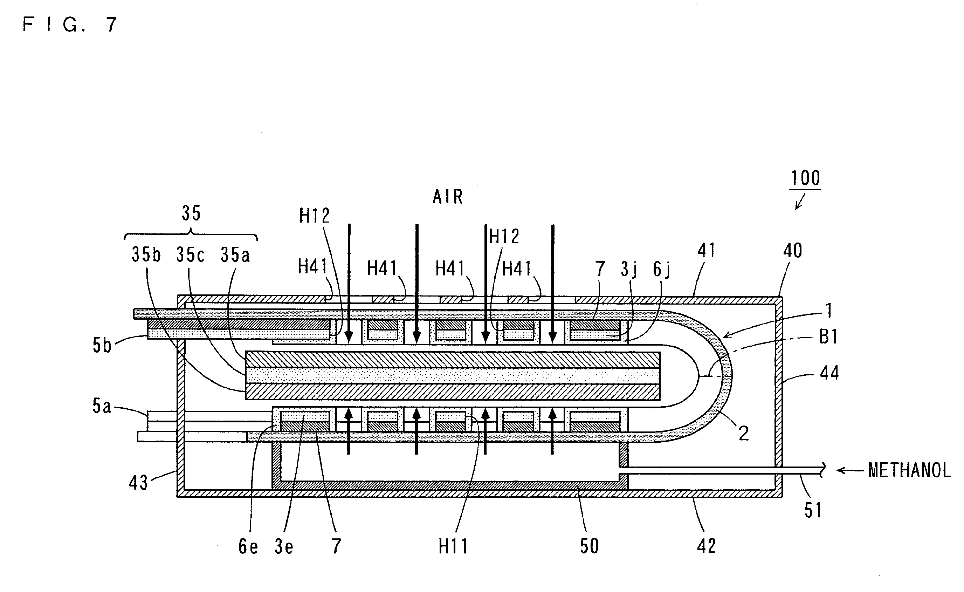

Fig. 6 is an external perspective view of a fuel cell 100 using the FPC board 1. Fig. 7 illustrates functions in the fuel cell 100, and is a sectional view taken along the line B-B of the fuel cell 100 illustrated in Fig. 6.

As illustrated in Figs. 6 and 7, the fuel cell 100 includes a casing 40 having a rectangular parallelepiped shape. The casing 40 is indicated by a broken line in Fig. 6. The casing 40 has an upper surface portion 41, a lower surface portion 42, one side surface portion 43, and the other side surface portion 44. Fig. 7 does not illustrate the remaining pair of side surface portions.

The FPC board 1 is sandwiched between the upper surface portion 41 and the lower surface portion 42 of the casing 40 while being bent along the bend portion B1 illustrated in Fig. 1 so that the one surface, on which the cover layers 6a to 6n are formed, is positioned on its inner side.

The drawn-out electrodes 5a and 5b in the FPC board 1 are drawn out of the one side surface portion 43 of the casing 40. Terminals of various external circuits are electrically connected to the drawn-out electrodes 5a and 5b.

Inside the casing 40, a plurality of (five in the present embodiment) electrode films 35 are arranged between the cover layer 6a and the cover layer 6f, between the cover layer 6b and the cover layer 6g, between the cover layer 6c and the cover layer 6h, between the cover layer 6d and the cover layer 6i, and between the cover layer 6e and the cover layer 6j, respectively, in the bent FPC board 1 (see Fig. 1 (a)). Thus, the plurality of electrode films 35 are connected in series.

Each of the electrode films 35 includes an air electrode 35a, a fuel electrode 35b, and an electrolyte film 35c. The air electrode 35a is formed on one surface of the electrolyte film 35c, and the fuel electrode 35b is formed on the other surface of the electrolyte film 35c. The air electrodes 35a in the plurality of electrode films 35 are opposite to the cover layers 6f to 6j in the FPC board 1, respectively, and the fuel electrodes 35b in the plurality of electrode films 35 are opposite to the cover layers 6a to 6e in the FPC board 1, respectively.

A plurality of openings H41 are formed on the upper surface portion 41 of the casing 40 to correspond to the plurality of openings H12, respectively, of the collector portions 3f to 3j. Air is supplied to the air electrodes 35a in the electrode films 35 via the plurality of openings H41 of the casing 40, the anisotropic through pores h (see Fig. 2) of the base insulating layer 2 (see Fig. 2), and the plurality of openings H12 of the collector portions 3f to 3j.

A fuel accommodating chamber 50 is provided on the lower surface portion 42 of the casing 40 to contact the first insulating portion 2a (see Fig. 1 (a)) of the base insulating layer 2. One end of a fuel supply pipe 51 is connected to the fuel accommodating chamber 50. The other end of the fuel supply pipe 51 is connected to a fuel supplier (not illustrated) provided outside through the other side surface portion 44 of the casing 40. Fuel is supplied from the fuel supplier to the fuel accommodating chamber 50 via the fuel supply pipe 51. The fuel is supplied to the fuel electrodes 35b in the electrode films 35 via the anisotropic thorough pores h (see Fig. 2) of the base insulating layer 2 and the plurality of openings H11 of the collector portions 3a to 3e. In the present embodiment, methanol is used as the fuel.

In the above-described configuration, methanol is decomposed into hydrogen ions and carbon dioxide in the plurality of fuel electrodes 35b, to form electrons. The formed electrons are led from the collector portion 3a (see Fig. 1) to the drawn-out electrode 5a in the FPC board 1. Hydrogen ions obtained by decomposing methanol permeate through the electrolyte films 35c to reach the air electrodes 35a. In the plurality of air electrodes 35a, hydrogen ions and oxygen are reacted while electrons led from the drawn-out electrode 5b to the collector portion 3j are consumed, to form water. In this manner, electrical power is supplied to the external circuits connected to the drawn-out electrodes 5a and 5b.

### (4) Effects

In the present embodiment, the base insulating layer 2 is used as a fuel supply amount adjustment film in the fuel cell 100. A fuel, for the fuel cell 100, such as methanol is supplied to the fuel electrode 35b in the electrode film 35 via the anisotropic through pores h of the base insulating layer 2 in the FPC board 1 and the plurality of openings H11 of the collector portions 3a to 3e. The each of anisotropic through pores h communicates with the base insulating layer 2 without diverging from its one surface to the other surface. Therefore, methanol is prevented from oozing out on the side surfaces of the base insulating layer 2. This enables a loss of the fuel to be reduced.

The pore diameter of each of the anisotropic through pores h and the porosity for the plurality of anisotropic through pores h can be optionally set when each of the anisotropic through pores h is formed. Therefore, the pore diameter of each of the anisotropic through pores h and the porosity for the plurality of anisotropic through pores h of the base insulating layer 2 are properly set so that an amount of supply of methanol to the fuel electrode 35b can be properly adjusted.

As described above, the pore diameter of each of the anisotropic through pores h of the base insulating layer 2 is set to 0.01 µm or more. Thus, the fuel can be sufficiently supplied to the fuel electrode 35b in the electrode film 35 via the anisotropic through pores h. As a result, an output of the fuel cell 100 can be increased.

The pore diameter of each of the anisotropic through pores h is set to 100 µm or less. Thus, the fuel can be prevented from being excessively supplied to the fuel electrode 35b in the electrode film 35 via the anisotropic through pores h. When an excessive amount of fuel is supplied to the fuel electrode 35b in the electrode film 35, the fuel permeates through the electrolyte film 35c to reach the air electrode 35a. This phenomenon is referred to as "crossover". By suppressing the crossover of the fuel, the output of the fuel cell 100 can be increased while the loss of the fuel is prevented from occurring.

As described above, the porosity for the anisotropic through pores h of the base insulating layer 2 is set to 1 % or more. Thus, the fuel can be sufficiently supplied to the fuel electrode 35b in the electrode film 35 via the anisotropic through pores h. The porosity for the anisotropic through pores h is set to 90 % or less. Thus, the crossover of the fuel can be suppressed.

### [2] Second Embodiment

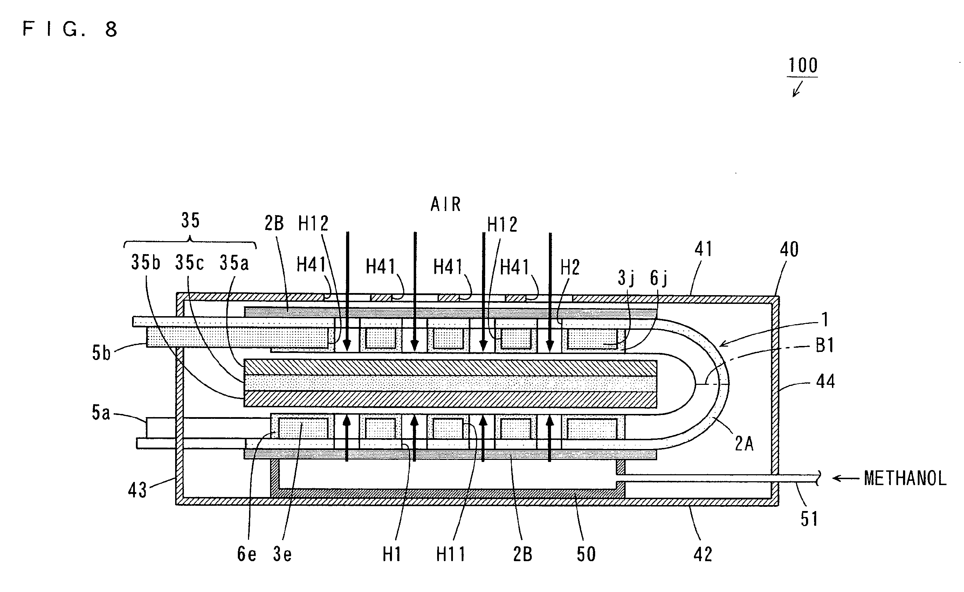

A difference of a fuel cell 100 according to a second embodiment from the fuel cell 100 according to the first embodiment will be described. Fig. 8 is a sectional view of the fuel cell 100 according to the second embodiment. Fig. 8 corresponds to a sectional view taken along a line B-B of the fuel cell 100 illustrated in Fig. 6.

As illustrated in Fig. 8, the fuel cell 100 according to the present embodiment has a similar configuration to that of the fuel cell 100 illustrated in Fig. 7 except that an FPC board 1 includes a base insulating layer 2A in place of the base insulating layer 2 illustrated in Fig. 1 and further includes two fuel supply amount adjustment films 2B.

Each of the fuel supply amount adjustment films 2B has anisotropic through pores h illustrated in Fig. 2, similarly to the base insulating layer 2 illustrated in Fig. 2. A method for forming the anisotropic through pores h in the fuel supply amount adjustment films 2B, the pore diameter of each of the anisotropic through pores h, the porosity for the anisotropic through pores h in the fuel supply amount adjustment films 2B, and the thickness of the fuel supply amount adjustment films 2B are similar to those of the base insulating layer 2 illustrated in Fig 2.

The base insulating layer 2A has a similar configuration to that of the base insulating layer 2 illustrated in Fig. 1 except that it does not have any anisotropic through pores h, has a plurality of openings H1 corresponding to a plurality of openings H11 of collector portions 3a to 3e, and has a plurality of openings H2 corresponding to a plurality of openings H12 of collector portions 3f to 3j.

The fuel cell 100 according to the present embodiment includes a casing 40 having a rectangular paralleopiped shape, similarly to the fuel cell 100 illustrated in Fig. 7. The FPC board 1 is sandwiched between an upper surface portion 41 and a lower surface portion 42 of the casing 40 while being bent along a bend portion B1 illustrated in Fig. 1 so that its one surface, on which cover layers 6a to 6n are formed, is positioned on its inner side. The one fuel supply amount adjustment film 2B is arranged between the base insulating layer 2A in the FPC board 1 and the fuel accommodating chamber 50 on the lower surface portion 42 of the casing 40. The other fuel supply amount adjustment film 2B is arranged between the base insulating layer 2A in the FPC board 1 and the upper surface portion 41 of the casing 40.

In the present embodiment, a fuel, for the fuel cell 100, such as methanol is supplied to a fuel electrode 35b in an electrode film 35 via the anisotropic through pores h in the fuel supply amount adjustment film 2B, the openings H1 of the base insulating layer 2A, and the openings H11 of the collector portions 3a to 3e. The each of anisotropic through pores h communicates with the fuel supply amount adjustment film 2B without diverging from its one surface to the other surface. Therefore, methanol is prevented from oozing out on side surfaces of the fuel supply amount adjustment film 2B. This enables a loss of the fuel to be reduced.

When each of the anisotropic through pores h in the fuel supply amount adjustment films 2B is formed, the pore diameter of each of the anisotropic through pores h and the porosity for the plurality of anisotropic through pores h can be optionally set. By properly setting the pore diameter of each of the anisotropic through pores h and the porosity for the plurality of anisotropic through pores in the fuel supply amount adjustment films 2B, therefore, an amount of supply of methanol to the fuel electrode 35b can be properly adjusted.

As described above, the pore diameter of each of the anisotropic through pores h in the fuel supply amount adjustment films 2B is set to 0.01 µm or more. Thus, the fuel can be sufficiently supplied to the fuel electrode 35b in the electrode film 35 via the anisotropic through pores h. As a result, an output of the fuel cell 100 can be increased.

The pore diameter of each of the anisotropic through pores h is set to 100 µm or less. Thus, the fuel can be prevented from being excessively supplied to the fuel electrode 35b in the electrode film 35 via the anisotropic through pores h. As a result, the output of the fuel cell 100 can be increased while the loss of the fuel is prevented from occurring.

As described above, the porosity for the anisotropic through pores h in the fuel supply amount adjustment films 2B is set to 1 % or more. Thus, the fuel can be sufficiently supplied to the fuel electrode 35b in the electrode film 35 via the anisotropic through pores h. The porosity for the anisotropic through pores h is set to 90 % or less. Thus, the crossover of the fuel can be suppressed.

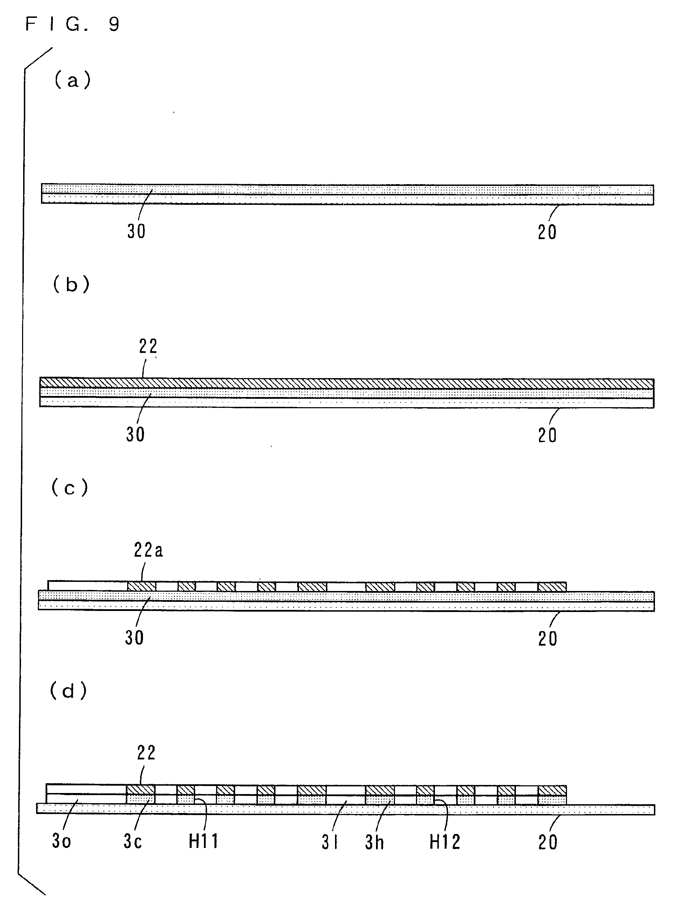

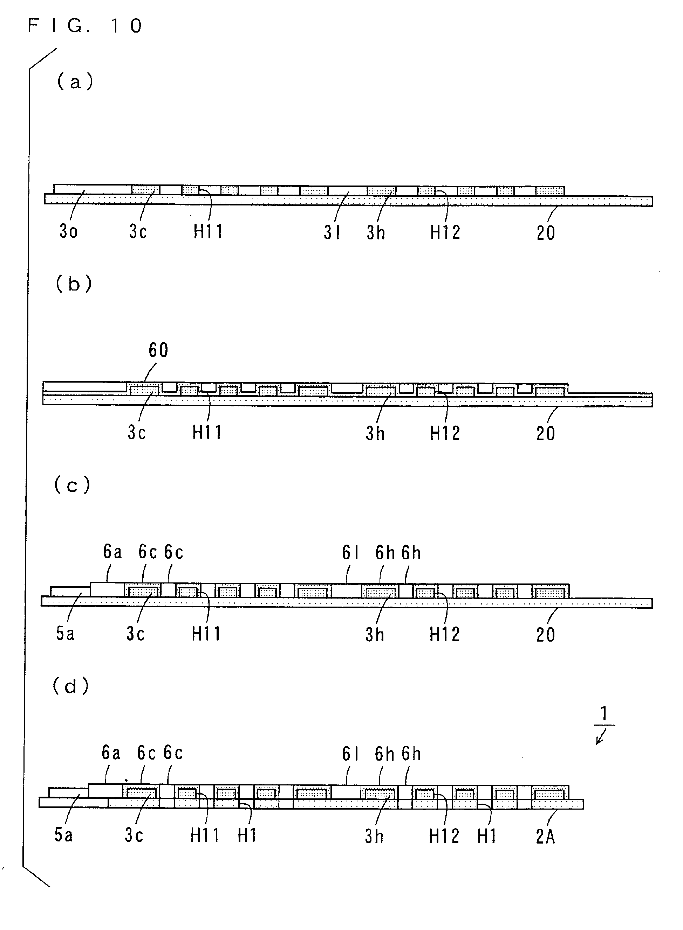

Figs. 9 and 10 are sectional views illustrating steps of the method for manufacturing the FPC board 1 according to the second embodiment, which respectively correspond to the sectional views taken along the line A-A illustrated in Fig. 1.

First, a two-layer CCL including an insulating layer 20 and a conductor layer 30 is prepared, as illustrated in Fig. 9 (a). The insulating layer 20 is composed of PET, for example, and the conductor layer 30 is composed of copper, for example. Then, a resist film 22 is formed of a photosensitive dry film resist or the like, for example, on the conductor layer 30 at predetermined temperature and pressure, as illustrated in Fig. 9 (b). The resist film 22 is exposed in a predetermined pattern, followed by development, to form an etching resist pattern 22a, as illustrated in Fig. 9 (c).

A region of the conductor layer 30 that is exposed while not covered with the etching resist pattern 22a is removed by etching using ferric chloride, as illustrated in Fig. 9 (d). The etching resist pattern 22a is then removed by a stripping solution, as illustrated in Fig. 10 (a). Thus, collector portions 3a to 3j, connection conductor portions 3k to 3n, and drawn-out conductor portions 3o and 3p (see Fig. 1 (a)) are formed on the insulating layer 20. A plurality of openings H11 are formed in the collector portions 3a to 3e, and a plurality of openings H12 are formed in the collector portions 3f to 3j.

Then, a cover layer 60 is formed by application or lamination on the insulating layer 20 to cover the collector portions 3a to 3j, the connection conductor portions 3k to 3n, and the drawn-out conductor portions 3o and 3p, as illustrated in Fig. 10 (b). Then, the cover layer 60 is exposed with a predetermined pattern, followed by development, to form cover layers 6a to 6n (see Fig. 1 (a)), as illustrated in Fig. 10 (c). Drawn-out electrodes 5a and 5b (see Fig. 1 (a)) are exposed while not covered with the cover layers 6a and 6j.

A plurality of openings H1 corresponding to the plurality of openings H11 of the collector portions 3a to 3e and a plurality of openings H2 corresponding to the plurality of openings H12 of the collector portions 3f to 3j are formed in the insulating layer 20, and the insulating layer 20 is cut in a predetermined shape, as illustrated in Fig. 10 (d). Thus, the FPC board 1 including the base insulating layer 2A, the collector portions 3a to 3j, the connection conductor portions 3k to 3n, the drawn-out conductor portions 3o and 3p, and the cover layers 6a to 6n is completed.

In a method for manufacturing the FPC board 1 according to the present embodiment, the necessity of steps for forming the plurality of anisotropic through pores h in the base insulating layer 2A is eliminated. Therefore, the two-layer CCL including copper and PET, for example, can be used as a material for the base insulating layer 2A. In this case, the necessity of steps for forming the adhesive layer 7 (see Fig. 7) between the base insulating layer 2A and the collector portions 3a to 3j, the connection conductor portions 3k to 3n and the drawn-out conductor portions 3o and 3p is eliminated. Therefore, the use of a fuel supply amount adjustment films 2B separate from the FPC board 1 makes it easy to manufacture the FPC board 1.

### [3] Another Embodiment

(1) While each of the anisotropic through pores h is formed in the whole base insulating layer 2 in the FPC board 1 in the first embodiment, the present invention is not limited to this. The anisotropic through pores h may be formed only in a portion of the base insulating layer 2, which contacts the fuel accommodating chamber 50 in the fuel cell 100 (the first insulating portion 2a of the base insulating layer 2 in the above-mentioned embodiment).

(2) While fuel supply amount adjustment films 2B are respectively arranged between the base insulating layer 2A in the FPC board 1 and the fuel accommodating chamber 50 on the lower surface portion 42 of the casing 40 and between the base insulating layer 2A in the FPC board 1 and the upper surface portion 41 of the casing 40 in the second embodiment, the present invention is not limited to this. The fuel supply amount adjustment film 2B need not be arranged between the base insulating layer 2A in the FPC board 1 and the upper surface portion 41 of the casing 40.

(3) While the FPC board 1 includes the five pairs of collector portions (the collector portions 3a and 3f, the collector portions 3b and 3g, the collector portions 3c and 3h, the collector portions 3d and 3i, and the collector portions 3e and 3j) in the first and second embodiments, the present invention is not limited to this. The number of pairs of collector portions in the FPC board 1 may be four or less or six or more as long as it is two or more. Thus, any number of electrode films 35 can be connected in series.

The FPC board 1 may include a pair of collector portions. In this case, the connection conductor portions 3k to 3n are not provided.

(4) While the fuel supply amount adjustment film preferably has only anisotropic through pores, the fuel supply amount adjustment film may have the anisotropic through pores and pores different from the anisotropic through pores. For example, the fuel supply amount adjustment film may have isotropic through pores, described below. In this case, each of the isotropic through pores is not preferably opened to side surfaces of the fuel supply amount adjustment film.

### [4] Examples

### (1) Inventive Examples and Comparative Examples

In inventive examples 1 and 2 and a comparative example 1, a fuel supply amount adjustment film 2B, described below, was manufactured. In inventive examples 3 to 6 and comparative examples 2 and 3, an FPC board 1, described below, was manufactured.

In the inventive example 1, a fuel supply amount adjustment film 2B was manufactured using a PET film (manufactured by ion track technology for innovative products) having anisotropic through pores h. The thickness of the fuel supply amount adjustment film 2B was 15 µm, and the pore diameter of each of the anisotropic through pores h was 8 µm.

In the inventive example 2, a fuel supply amount adjustment film 2B was manufactured using a PI film (manufactured by ion track technology for innovative products) having anisotropic through pores h. The thickness of the fuel supply amount adjustment film 2B was 17 µm, and the pore diameter of each of the anisotropic through pores h was 8 µm.

In the inventive example 3, an FPC board, described below, was manufactured in a similar method to that in the first embodiment. In steps illustrated in Fig. 3 (a), a two-layer base material including a carrier layer 8 and a conductor layer 30 was first prepared. The carrier layer 8 is composed of a PET with a pressure sensitive adhesive, and the conductor layer 30 is composed of a copper foil. In steps illustrated in Fig. 3 (b), a photosensitive resist film 22 was then attached on the conductor layer 30 by lamination. In steps illustrated in Fig. 3 (c), an etching resist pattern 22a was then formed by exposure and development.

In steps illustrated in Fig. 3 (d), the conductor layer 30 was then formed into a predetermined pattern by etching the conductor layer 30 using ferric chloride. In steps illustrated in Fig. 4 (a), the etching resist pattern 22a was then removed by a stripping solution. In steps illustrated in Fig 4 (b), an epoxy-based adhesive layer precursor 7p was applied on the conductor layer 30, followed by drying at a temperature of 90°C for ten minutes, to form an adhesive layer 7.

The adhesive layer 7 on the conductor layer 30 was joined to a base insulating layer 2 composed of a PET film (manufactured by ion track technology for innovative products) having anisotropic through pores h under conditions of a temperature of 120°C and a pressure of 5 MPa for thirty minutes, and was cured at a temperature of 120°C for 120 minutes. Finally, a cover layer 60 composed of carbon ink was applied to the base insulating layer 2 to cover the conductor layer 30 using a printer, to dry and cure the cover layer 60 at a temperature of 110°C for sixty minutes. Thus, the FPC board 1 was manufactured. The thickness of the base insulating layer 2 was 15 µm, and the pore diameter of each of the anisotropic through pores h was 8 µm.

In the inventive example 4, an FPC board 1 was manufactured in a similar method to that in the inventive example 3 except that the thickness of a base insulating layer 2 was 17 µm and the pore diameter of each of anisotropic through pores h was 5 µm.

In the inventive example 5, an FPC board 1 was manufactured in a similar method to that in the inventive example 3 except that the thickness of a base insulating layer 2 was 15 µm and the pore diameter of each of anisotropic through pores h was 12 µm.

In the inventive example 6, an FPC board 1 was manufactured in a similar method to that in the inventive example 3 except that the base insulating layer 2 composed of PET having anisotropic through pores h was replaced with a base insulating layer 2 composed of PI (phosphatidylinositol) having anisotropic through pores h. The thickness of the base insulating layer 2 was 17 µm, and the pore diameter of each of the anisotropic through pores h was 3 µm.

In the comparative example 1, a fuel supply amount adjustment film 2B was manufactured using a urethane foam having isotropic through pores. The thickness of the fuel supply amount adjustment film 2B was 15 µm, and the pore diameter of each of the isotropic through pores was 8 µm. The isotropic through pores extended in a random direction, and diverged in a random direction.

In the comparative example 2, an FPC board 1 was manufactured in a similar method to that in the inventive example 3 except that the base insulating layer 2 composed of PET having anisotropic through pores h was replaced with a base insulating layer 2 composed of a nonwoven fabric having an isotropic through pores. The thickness of the base insulating layer 2 was 15 µm, and the pore diameter of each of the isotropic through pores was 8 µm.

In the comparative example 3, an FPC board 1 was manufactured in a similar method to that in the inventive example 3 except that the base insulating layer 2 composed of PET having anisotropic through pores h was replaced with a base insulating layer 2 composed of a urethane foam having isotropic through pores. The thickness of the base insulating layer 2 was 15 µm, and the pore diameter of each of the isotropic through pores was 8 µm.

### (2) Permeation Test of Chemical Solution

A certain amount of chemical solution was delivered by drops onto the fuel supply amount adjustment films 2B in the inventive examples 1 and 2 and the comparative example 1 and the base insulating layers 2 in the FPC boards 1 in the inventive examples 3 to 6 and the comparative examples 2 and 3, to visually observe oozing of the chemical solution from side surfaces of the fuel supply amount adjustment films 2B and the base insulating layers 2. Examples of the chemical solution include methanol having a concentration of 100 %, a methanol solution having a concentration of 50 %, and a methanol solution having a concentration of 10 %. Table 1 lists results of a permeation test of the chemical solution on the fuel supply amount adjustment films 2B and the base insulating layers 2.

**[TABLE 1]**

| | MATERIAL | THICKNESS [µm] | PORE DIAMETER [µm] | LEAK FROM SIDE SURFACES | | |
|---|---|---|---|---|---|---|
| | | | | METHANOL 100% | METHANOL 50% | METHANOL 10% |
| INVENTIVE EXAMPLE 1 | FUEL SUPPLY AMOUNT ADJUSTMENT FILM (PET) | 15 | 8 | NO | NO | NO |
| INVENTIVE EXAMPLE 2 | FUEL SUPPLY AMOUNT ADJUSTMENT FILM (PI) | 17 | 8 | NO | NO | NO |
| INVENTIVE EXAMPLE 3 | FPC BOARD (PET) | 15 | 8 | NO | NO | NO |
| INVENTIVE EXAMPLE 4 | FPC BOARD (PET) | 17 | 5 | NO | NO | NO |
| INVENTIVE EXAMPLE 5 | FPC BOARD (PET) | 15 | 12 | NO | NO | NO |
| INVENTIVE EXAMPLE 6 | FPC BOARD (PI) | 17 | 3 | NO | NO | NO |
| COMPARATIVE EXAMPLE 1 | FUEL SUPPLY AMOUNT ADJUSTMENT FILM (URETHANE FOAM) | 15 | 8 | YES | YES | YES |
| COMPARATIVE EXAMPLE 2 | FPC BOARD (NONWOVEN FABRIC) | 15 | 8 | YES | YES | YES |
| COMPARATIVE EXAMPLE 3 | FPC BOARD (URETHANE FOAM) | 15 | 8 | YES | YES | YES |

From results of the inventive examples 1 to 6 and the comparative examples 1 to 3, it was confirmed that the chemical solution did not ooze out of the side surfaces of the fuel supply amount adjustment film 2B having the anisotropic through pores h and the base insulating layer 2.

### [5] Correspondences between Elements in the Claims and Parts in Embodiments

In the following paragraphs, non-limiting examples of correspondences between various elements recited in the claims below and those described above with respect to various preferred embodiments of the present invention are explained.

In the above-described embodiments, the fuel cell 100 is an example of a fuel cell, the base insulating layer 2 or the fuel supply amount adjustment film 2B is examples of an insulating layer and a fuel supply amount adjustment film, and the anisotropic through pore h is an example of an anisotropic through pore. The collector portions 3a to 3j, the connection conductor portions 3k to 3n, and the drawn-out portions 3o and 3p are examples of a conductor layer, and the cover layers 6a to 6n are examples of a cover layer. The FPC board 1 according to the first embodiment is an example of a wiring circuit board, and the FPC board 1 according to the second embodiment is an example of an electrode. The electrode film 35 is an example of a cell element, the fuel electrode 35b is an example of a fuel electrode, and the casing 40 is an example of a casing.

As each of various elements recited in the claims, various other elements having configurations or functions described in the claims can also be used.

While preferred embodiments of the present invention have been described above, it is to be understood that variations and modifications will be apparent to those skilled in the art.

### Industrial Applicability

The present invention can be effectively utilized in various types of fuel supply amount adjustment films.

## Claims

1. A printed circuit board (1) used for a fuel cell (100), comprising:
a fuel supply amount adjustment film comprising an insulating layer (2, 2B) having through pores (h), wherein the through pores (h) extend from one surface to another surface of the layer (2, 2B), but with substantially none of the through pores (h) extending to a side surface of the layer (2, 2B), and wherein the thickness of the layer (2, 2B) is not less than 5µm and not more than 500µm; and
a conductor layer (3a-3e) having a predetermined pattern provided on said fuel supply amount adjustment film, wherein openings (H11) are formed in said conductor layer (3a-3e);
wherein:
the pore diameter of each of said through pores (h) is not less than 0.01 µm and not more than 100µm;
**characterised in that**:
in use, fuel is supplied to each of said openings (H11) of the conductor layer (3a-3e) via a plurality of the through pores (h) of the insulating layer (2, 2B).

2. The printed circuit board (1) according to claim 1, wherein the porosity for said through pores (h) of said insulating layer (2, 2B) is not less than 1 % and not more than 90 %.

3. The printed circuit board (1) according to claim 1 or 2, further comprising:
a cover layer (6a-6e) formed on said fuel supply amount adjustment film (2, 2B) to cover at least a part of said conductor layer (3a-3e).

4. The printed circuit board (1) according to any of claims 1 to 3, further comprising:
a base insulating layer (2A) between said insulating layer (2B) having the through pores (h) and said conductor layer (3a-3e), wherein openings (H1) are formed in said base insulating layer (2A) corresponding to said openings (H11) formed in conductor layer (3a-3e).

5. A fuel cell (100) comprising:
a cell element (35);
the printed circuit board (1) according to any of claims 1 to 4; and
a casing (40) that accommodates said cell element (35) and said printed circuit board (1);
wherein the power generated in said cell element (35) is taken out of said casing (40) via said conductor layer (3a-3e) in said printed circuit board (1).

6. A fuel cell (100) according to claim 5, wherein the cell element (35) has a fuel electrode, and the fuel supply amount adjustment film (2, 2B) is opposed to said fuel electrode (35b) of said cell element (35) with said conductor layer (3a-3e) sandwiched therebetween.

7. A method of manufacturing a printed circuit board (1), comprising the steps of:
preparing a conductor layer (3a-3e) having a predetermined pattern, wherein openings (H11) are formed in said conductor layer (3a-3e); and
joining a fuel supply amount adjustment film comprising an insulating layer (2, 2B) having through pores (h) to said conductor layer (3a-3e);
wherein the through pores (h) extend from one surface to another surface of the layer (2, 2B), but with substantially none of the through pores (h) extending to a side surface of the layer (2, 2B),
the thickness of the layer (2, 2B) is not less than 5µm and not more than 500µm,
the pore diameter of each of said through pores (h) is not less than 0.01 µm and not more than 100µm;
the joining being such that, in use, fuel is supplied to each of said openings (H11) of the conductor layer (3a-3e) via a plurality of the through pores (h) of the insulating layer (2, 2B).

8. The method according to claim 7, wherein said step of joining comprises joining said fuel supply amount adjustment film to said conductor layer (3a-3e) with an adhesive pattern (7) having said predetermined pattern sandwiched therebetween.

9. The method according to claim 7 or 8, wherein said step of preparing said conductor layer (3a-3e) comprises preparing a two-layer base material composed of a carrier layer (8) and said conductor layer (3a-3e), and
said step of joining comprises separating said carrier layer (8) from said conductor layer (3a-3e).

## Patentansprüche

1. Leiterplatte (1) für eine Brennstoffzelle (100), umfassend:
einen Brennstoffzufuhrmengenanpassungsfilm, der eine Isolierschicht (2, 2B) umfasst, der Durchgangsporen (h) aufweist, wobei die Durchgangsporen (h) sich von einer Fläche zu einer anderen Fläche der Schicht (2, 2B) erstrecken, wobei jedoch im Wesentlichen keine der Durchgangsporen (h) sich zu einer Seitenfläche der Schicht (2, 2B) hin erstreckt, und wobei die Dicke der Schicht (2, 2B) nicht weniger als 5 µm und nicht mehr als 500 µm beträgt;
eine Leiterschicht (3a-3e) mit einer vorbestimmten Struktur, die auf dem Brennstoffzufuhrmengenanpassungsfilm bereitgestellt ist, wobei Öffnungen (H11) in der Leiterschicht (3a-3e) ausgebildet sind;
wobei:
der Porendurchmesser jeder der Durchgangsporen (h) nicht weniger als 0,01 µm und nicht mehr als 100 µm beträgt;
**dadurch gekennzeichnet, dass**:
im Gebrauch jeder der Öffnungen (H11) der Leiterschicht (3a-3e) über eine Vielzahl der Durchgangsbohrungen (h) der Isolierschicht (2, 2B) Brennstoff zugeführt wird.

2. Leiterplatte (1) nach Anspruch 1, wobei die Porosität der Durchgangsporen (h) der Isolierschicht (2, 2B) nicht weniger als 1 % und nicht mehr als 90 % beträgt.

3. Leiterplatte (1) nach Anspruch 1 oder 2, ferner umfassend:
eine Abdeckschicht (6a-6e), die auf dem Brennstoffzufuhrmengenanpassungsfilm (2, 2B) ausgebildet ist, um zumindest einen Teil der Leiterschicht (3a-3e) abzudecken.

4. Leiterplatte (1) nach einem der Ansprüche 1 bis 3, ferner umfassend:
eine Basisisolierschicht (2A) zwischen der Isolierschicht (2B) mit den Durchgangsporen (h) und der Leiterschicht (3a-3e), wobei in der Basisisolierschicht (2A) Öffnungen (H1), die mit den in der Leiterschicht (3a-3e) ausgebildeten Öffnungen (H11) übereinstimmen, ausgebildet sind.

5. Brennstoffzelle (100), umfassend:
ein Zellenelement (35);
die Leiterplatte (1) nach einem der Ansprüche 1 bis 4, und
ein Gehäuse (40), das das Zellenelement (35) und die Leiterplatte (1) aufnimmt;
wobei die im Zellenelement (35) erzeugte Leistung dem Gehäuse (40) über die Leiterschicht (3a-3e) in der Leiterplatte (1) entnommen wird.

6. Brennstoffzelle (100) nach Anspruch 5, wobei das Zellenelement (35) eine Brennstoffelektrode aufweist und der Brennstoffzufuhrmengenanpassungsfilm (2, 2B) der Brennstoffelektrode (35b) des Zellenelements (35) gegenüber liegt, wobei die Leiterschicht (3a, 3e) sandwichartig dazwischen angeordnet ist.

7. Verfahren zum Herstellen einer Leiterplatte (1), das folgende Schritte umfasst:
Herstellen einer Leiterschicht (3a-3e) mit einer vorbestimmten Struktur, wobei Öffnungen (H11) in der Leiterschicht (ea-3e) ausgebildet sind; und
Verbinden eines Brennstoffzufuhrmengenanpassungsfilms, der eine Isolierschicht (2, 2B) mit Durchgangsbohrungen (h) aufweist, mit der Leiterschicht (3a-3e);
wobei die Durchgangsporen (h) sich von einer Fläche zu einer anderen Fläche der Schicht (2, 2B) erstrecken, wobei jedoch im Wesentlichen keine der Durchgangsporen (h) sich zu einer Seitenfläche der Schicht (2, 2B) hin erstreckt,
wobei die Dicke der Schicht (2, 2B) nicht weniger als 5 µm und nicht mehr als 500 µm beträgt;
wobei der Porendurchmesser jeder der Durchgangsporen (h) nicht weniger als 0,01 µm und nicht mehr als 100 µm beträgt;
wobei die Verbindung derart ist, dass
im Gebrauch jeder der Öffnungen (H11) der Leiterschicht (3a-3e) über eine Vielzahl der Durchgangsbohrungen (h) der Isolierschicht (2, 2B) Brennstoff zugeführt wird.

8. Verfahren nach Anspruch 7, wobei der Schritt des Verbindens das Verbinden des Brennstoffzufuhrmengenanpassungsfilms mit der Leiterschicht (3a-3e) mit einer Haftstruktur (7) umfasst, wobei die vorbestimmte Struktur sandwichartig dazwischen angeordnet ist.

9. Verfahren nach Anspruch 7 oder 8, wobei der Schritt des Herstellens der Leiterschicht (3a-3e) das Herstellen eines Zweischicht-Basismaterials umfasst, das aus einer Trägerschicht (8) und der Leiterschicht (3a-3e) zusammengesetzt ist, und
wobei der Schritt des Verbindens das Trennen der Trägerschicht (8) von der Leiterschicht (3a-3e) umfasst.

## Revendications

1. Carte de circuit imprimé (1) utilisée pour une pile à combustible (100), comprenant :
un film d'ajustement de quantité de fourniture de combustible comprenant une couche isolante (2, 2B) comportant des pores traversants (h), dans laquelle les pores traversants (h) s'étendent d'une surface à l'autre de la couche (2, 2B), mais sensiblement sans qu'aucun des pores traversants (h) ne s'étende vers une surface latérale de la couche (2, 2B), et dans laquelle l'épaisseur de la couche (2, 2B) est supérieure ou égale à 5 µm et inférieure ou égale à 500 µm ; et
une couche conductrice (3a à 3e) ayant un motif prédéterminé prévu sur ledit film d'ajustement de quantité de fourniture de combustible, dans laquelle des ouvertures (H11) sont formées dans ladite couche conductrice (3a à 3e) ;
dans laquelle :
le diamètre de pore de chacun desdits pores traversants (h) est supérieur ou égal à 0,01 µm et inférieur ou égal à 100 µm ;
**caractérisée en ce que** :
en utilisation, le combustible est fourni à chacune desdites ouvertures (H11) de la couche conductrice (3a à 3e) par l'intermédiaire d'une pluralité des pores traversants (h) de la couche isolante (2, 2B).

2. Carte de circuit imprimé (1) selon la revendication 1, dans laquelle la porosité pour lesdits pores traversants (h) de ladite couche isolante (2, 2B) est supérieure ou égale à 1 % et inférieure ou égale à 90 %.

3. Carte de circuit imprimé (1) selon la revendication 1 ou 2, comprenant en outre :
une couche de recouvrement (6a à 6e) formée sur ledit film d'ajustement de quantité de fourniture de combustible (2, 2B) pour recouvrir au moins une partie de ladite couche conductrice (3a à 3e).

4. Carte de circuit imprimé (1) selon l'une quelconque des revendications 1 à 3, comprenant en outre :
une couche isolante de base (2A) entre ladite couche isolante (2B) comportant les pores traversants (h) et ladite couche conductrice (3a à 3e), dans laquelle des ouvertures (H1) sont formées dans ladite couche isolante de base (2A) en correspondance avec lesdites ouvertures (H11) formées dans la couche conductrice (3a à 3e).

5. Pile à combustible (100) comprenant :
un élément de pile (35) ;
la carte de circuit imprimé (1) selon l'une quelconque des revendications 1 à 4 ; et
un boîtier (40) qui loge ledit élément de pile (35) et ladite carte de circuit imprimé (1),
dans laquelle la puissance générée dans ledit élément de pile (35) est extraite dudit boîtier (40) par l'intermédiaire de ladite couche conductrice (3a à 3e) dans ladite carte de circuit imprimé (1).

6. Pile à combustible (100) selon la revendication 5, dans laquelle l'élément de pile (35) comporte une électrode de combustible, et le film d'ajustement de quantité de fourniture de combustible (2, 2B) est opposé à ladite électrode de combustible (35b) dudit élément de pile (35), ladite couche conductrice (3a à 3e) étant intercalée entre eux.

7. Procédé de fabrication d'une carte de circuit imprimé (1), comprenant les étapes :
de préparation d'une couche conductrice (3a à 3e) ayant un motif prédéterminé, dans lequel des ouvertures (H11) sont formées dans ladite couche conductrice (3a à 3e) ; et
de jonction d'un film d'ajustement de quantité de fourniture de combustible comprenant une couche isolante (2, 2B) comportant des pores traversants (h) à ladite couche conductrice (3a à 3e) ;
dans lequel les pores traversants (h) s'étendent d'une surface à l'autre de la couche (2, 2B), mais sensiblement sans qu'aucun des pores traversants (h) ne s'étende vers une surface latérale de la couche (2, 2B),
l'épaisseur de la couche (2, 2B) est supérieure ou égale à 5 µm et inférieure ou égale à 500 µm,
le diamètre de pore de chacun desdits pores traversants (h) est supérieur ou égal à 0,01 µm et inférieur ou égal à 100 µm ;
la jonction étant telle que, en utilisation, le combustible est fourni à chacune desdites ouvertures (H11) de la couche conductrice (3a à 3e) par l'intermédiaire d'une pluralité des pores traversants (h) de la couche isolante (2, 2B) .

8. Procédé selon la revendication 7, dans lequel ladite étape de jonction comprend la jonction dudit film d'ajustement de quantité de fourniture de combustible à ladite couche conductrice (3a à 3e) par un motif adhésif (7), ledit motif prédéterminé étant intercalé entre eux.

9. Procédé selon la revendication 7 ou 8, dans lequel ladite étape de préparation de ladite couche conductrice (3a à 3e) comprend la préparation d'un matériau de base à deux couches composé d'une couche de support (8) et de ladite couche conductrice (3a à 3e), et
ladite étape de jonction comprend la séparation de ladite couche de support (8) de ladite couche conductrice (3a à 3e).
